# EUROPEAN PATENT APPLICATION

(11) **EP 4 618 182 A1**
(43) Date of publication of application: **17.09.2025**
(21) Application number: 23889028.9
(22) Date of filing: 01.11.2023
(51) Int. Cl.: H01M 4/36, H01M 10/0562

(54) **NEGATIVE COATING COMPOSITION FOR ALL SOLID-STATE BATTERY, METHOD FOR PREPARING SAME, AND ALL SOLID-STATE BATTERY INCLUDING SAME**

(30) Priority: 10.11.2022 KR 20220149822
(71) Applicant: SAMSUNG SDI CO., LTD., Yongin-si, Gyeonggi-do 17084 (KR)
(72) Inventor: SOHN, Juhee, Yongin-si, Gyeonggi-do 17084 (KR); LEE, Jungho, Yongin-si, Gyeonggi-do 17084 (KR); SHIN, Hyuksoo, Yongin-si, Gyeonggi-do 17084 (KR); YANG, Jinhoon, Yongin-si, Gyeonggi-do 17084 (KR); JUNG, Sungwon, Yongin-si, Gyeonggi-do 17084 (KR)
(74) Representative: Gulde & Partner
(86) International application number: PCT/KR2023/017259
(87) International publication number: WO 2024/101766

(57) **Abstract**

Disclosed are a negative electrode coating composition for an all-solid-state battery and an all-solid-state battery including the same, the negative electrode coating composition for an all-solid-state battery including a metal and a carbon-based material, wherein the metal and carbon-based material are chemically bonded through sulfur.

## Description

### TECHNICAL FIELD

The present invention relates to a negative electrode coating composition for an all-solid-state battery and an all-solid-state battery including the same.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid electrolyte. One way to increase the energy density of these all-solid-state batteries is to use lithium metal as a negative electrode. However, in this case, there are problems due to lithium volume expansion and irreversible dendrite growth during charge and discharge.

To solve these problems, a method of configuring the negative electrode by forming a layer in which lithium is deposited on the negative electrode current collector during charging and discharging, without using lithium metal itself, is being studied, however, this method is not suitable because it causes low power characteristics and excessive occurrence of short-circuit phenomena.

### DETAILED DESCRIPTION OF THE INVENTION

### TECHNICAL PROBLEM

An embodiment provides negative electrode coating composition for an all-solid-state battery having a strong bonding force between metal and carbon.

Another embodiment provides an all-solid-state battery including the negative electrode coating composition.

### TECHNICAL SOLUTION

An embodiment provides a negative electrode coating composition for an all-solid-state battery including a metal and a carbon-based material, wherein the metal and carbon-based material are chemically bonded through sulfur.

The negative electrode coating composition may have a peak related to metal-sulfur bonding in a spectrum obtained by XPS analysis.

The negative electrode coating composition may have a peak appearing at a binding energy of 160 eV to 162 eV in an S2p spectrum obtained by XPS analysis.

The carbon-based material may be amorphous carbon, crystalline carbon, or a mixture thereof.

The metal may be Ag, Au, Sn, Zn, Al, Mg, Ge, Cu, In, Ni, Bi, Pt, Pd, or a combination thereof.

An amount of the metal may be 3 wt% to 40 wt% based on 100 wt% of a total amount of the metal and the carbon-based material.

Another embodiment provides a method for preparing a negative electrode coating composition for an all-solid-state battery which includes: mixing a carbon-based material and a sulfur raw material to prepare a mixture; supporting a metal on the mixture to prepare a supported product; and heat treating the supported product

The sulfur raw material may be a thiol compound, a sulfide compound, a thiophene compound, a sulfonic acid, a sulfone, a sulfoxide, or a combination thereof.

The heat treating may be performed at 100 °C to 500 °C.

Another embodiment provides an all-solid-state battery including: a negative electrode including a current collector and a negative electrode coating layer on one surface of the current collector; a positive electrode; and a solid electrolyte layer between the negative electrode and the positive electrode, wherein the negative electrode coating layer includes the negative electrode coating composition.

The solid electrolyte may be a sulfide-based solid electrolyte.

The all-solid-state battery may further include a lithium-containing layer formed between the current collector and the negative electrode coating layer during initial charging.

### ADVANTAGEOUS EFFECTS

The negative electrode coating composition for an all-solid-state battery according to an embodiment has a strong bonding force between metal and carbon, and the metal is uniformly dispersed in a carbon-based material, thereby preventing coagulation of metal particles.

### BRIEF DESCRIPTION OF THE DRAWINGS

FIG. 1 is a schematic view schematically illustrating an all-solid-state battery according to an embodiment.
FIG. 2 is a schematic cross-sectional view showing the state of an all-solid-state battery after charging according to an embodiment.
FIG. 3 is a TEM photograph of the negative electrode coating composition manufactured in Example 1.
FIG. 4 is a TEM photograph of the negative electrode coating composition manufactured in Comparative Example 1.
FIG. 5 is a graph showing XPS S2p spectra for negative electrode coating compositions prepared according to Example 1, Comparative Example 1, and Comparative Example 2.
FIG. 6 is a graph showing the weight change by measuring the thermogravimetric analysis of the negative electrode coating compositions of Example 1 and Comparative Example 2.
FIG. 7 is a graph showing the DTG change by measuring the thermogravimetric analysis of the negative electrode coating compositions of Example 1 and Comparative Example 2.

### BEST MODE FOR PERFORMING INVENTION

Hereinafter, embodiments of the present invention will be described in detail. However, these embodiments are merely examples, the present invention is not limited thereto, and the present invention is defined by the scope of claims.

As used herein, when specific definition is not otherwise provided, it will be understood that when an element such as a layer, film, region, or substrate is referred to as being "on" another element, it may be directly on the other element or intervening elements may also be present.

In the present invention, "particle size" or "particle diameter" may be an average particle size. Additionally, the average particle diameter may be defined as the average particle diameter (D50) based on 50% of the cumulative volume in the cumulative size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60 W, and an average particle diameter (D50) in 50% reference of the particle size distribution in a measuring apparatus may be calculated.

An embodiment relates to a negative electrode coating composition for an all-solid-state battery. In an embodiment, the negative electrode coating layer for an all-solid-state battery refers to a material that helps lithium ions deintercalated from a positive electrode active material during charging and discharging of an all-solid-state battery to move toward the negative electrode and be precipitated on the surface of a current collector. Such a negative electrode coating composition may be included in a negative electrode coating layer of an all-solid-state battery. In addition, the negative electrode of the all-solid-state battery including such a negative electrode coating layer has a lithium deposition layer formed between the current collector and the negative electrode coating layer due to precipitation of lithium ions, and this lithium deposition layer acts as a negative electrode active material, and such a negative electrode is generally referred to as a deposition-type negative electrode.

According to an embodiment, a negative electrode coating composition for an all-solid-state battery includes a metal and a carbon-based material, wherein the metal and the carbon-based material are chemically bonded via sulfur.

To explain this in more detail, the metal and carbon-based material are not simply physically mixed or agglomerated, but are chemically bonded to each other. The chemical bond between metal and carbon-based material may be a chemical bond via sulfur.

The chemical bonding of the metal and carbon-based material may be achieved by using a sulfur raw material in the negative electrode coating composition preparation. This will be described in detail in the preparation of the negative electrode coating composition.

Because the metal and carbon-based material are chemically bonded, the bonding strength is superior to that of a physical bond, and thus, the problem of the metal and carbon-based material being separated from each other during the mixing process if manufacturing a negative electrode using this negative electrode coating composition may be effectively prevented. Generally, in the negative electrode coating composition, a metal is presented in the form of a metal mixed with a carbon-based material, and at this time, it is difficult for the metal to be uniformly dispersed in the carbon-based material, however, in the negative electrode coating composition according to an embodiment, the metal may be uniformly dispersed through a functional group that is uniformly distributed in the carbon-based material. Therefore, metal coagulation may be prevented, and thus the distribution of current within the negative electrode may be made uniform.

According to an embodiment, a negative electrode coating composition is a composition in which a metal and a carbon-based material are chemically bonded through sulfur, which may be confirmed by a peak related to metal-sulfur (M-S) bonding in a spectrum obtained by XPS analysis.

For example, if the metal is silver, the S2p spectrum obtained by XPS analysis may have a peak appearing at a binding energy of 160 eV to 162 eV.

If the metal and carbon-based material are simply mixed, that is, not chemically bonded via sulfur, these peaks according to XPS analysis do not appear. In addition, even if the sulfur-containing compound is coated on the carbon-based material but is not chemically bonded, two peaks may be measured: one peak appearing at a binding energy of 160 eV to 162 eV and the other peak appearing at a binding energy of 163 eV to 166 eV.

The carbon-based material may be amorphous carbon, crystalline carbon, or a mixture thereof. The amorphous carbon may be, for example, carbon black, acetylene black, denka black, ketjen black, furnace black, activated carbon, or a combination thereof. An example of the above carbon black is Super P (Timcal). The crystalline carbon may be natural graphite, artificial graphite, a carbon nanotube, graphene, or a combination thereof. The crystalline carbon may have an unspecific shape, a plate shape, a flake shape, a spherical shape, or a fibrous shape.

In an embodiment, the metal may be Ag, Au, Sn, Zn, Al, Mg, Ge, Cu, In, Ni, Bi, Pt, Pd, or a combination thereof. As the negative electrode coating composition includes the metal, the electrical conductivity of the negative electrode may be further improved.

The metal may be a nanoparticle, and the size of the metal nanoparticle may be, for example, an average size of 5 nm to 80 nm, but a nanometer size may be suitably used. By using the metal nanoparticles having such nano-size, the battery characteristics (e.g., cycle-life characteristics) of an all-solid-state battery may be improved. If the metal particle size increases to the micrometer level, the uniformity of the metal particles in the negative electrode coating layer decreases, which is not suitable because the current density in a specific area increases and the cycle-life characteristics may deteriorate.

In the negative electrode coating composition according to an embodiment, the amount of the metal may be 3 wt% to 40 wt%, 3 wt% to 30 wt%, 4 wt% to 25 wt%, 5 wt% to 20 wt%, or 5 wt% to 15 wt% based on 100 wt% of the total amount of the negative electrode coating composition.

Additionally, the carbon-based material may be included in an amount of 60 wt% to 97 wt%, 70 wt% to 97 wt%, 75 wt% to 96 wt%, 80 wt% to 95 wt%, or 85 wt% to 95 wt% based on 100 wt% of the total amount of the negative electrode coating composition.

Because the metal and carbon-based material in the negative electrode coating composition are chemically bonded via sulfur, sulfur may be present in the negative electrode coating composition. It does not mean that sulfur separately and dependently present, since it serves to chemically bond the metal with the carbon-based material. Herein, the sulfur amount is an amount that may bond the metal with carbon-based material, and because it is a trace amount, it does not need to be an amount that may be quantitatively analyzed. Therefore, there is no need to limit a sulfur amount.

If the amount of the metal or the carbon-based material is within the above ranges, the metal may be evenly dispersed in the carbon-based material. In addition, if the amounts of the metal and the carbon-based material are within the above ranges, lithium ions deintercalated from the positive electrode active material during charging move toward the negative electrode, and a lithium deposition layer is substantially mostly formed between the current collector and the negative electrode coating layer, and thus, if lithium precipitation occurs on the surface of the negative electrode coating layer, a short circuit problem, a problem due to a side reaction with the electrolyte, or a problem of crack occurrence on the negative electrode side may be effectively suppressed.

The amorphous carbon may be a single particle or may be an aggregate having a secondary particle where primary particles are aggregated. If the amorphous carbon is a single particle, it may be an amorphous carbon particle having an average particle diameter of less than or equal to 100 nm, for example, a nanosize of 10 nm to 100 nm.

In addition, if the amorphous carbon is an aggregate, the particle size of the primary particle may be 20 nm to 100 nm, and the particle size of the secondary particle may be 1 µm to 20 µm.

In an embodiment, the particle size of the primary particles may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm, and less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm.

In an embodiment, the particle size of the secondary particles may be greater than or equal to 1 µm, greater than or equal to 3 µm, greater than or equal to 5 µm, greater than or equal to 7 µm, greater than or equal to 10 µm, or greater than or equal to 15 µm, and less than or equal to 20 µm, less than or equal to 15 µm, less than or equal to 10 µm, less than or equal to 7 µm, less than or equal to 5 µm, or less than or equal to 3 µm.

The shape of the primary particles may be spherical, elliptical, plate-shaped, and a combination thereof, and in an embodiment, the shape of the primary particles may be spherical, elliptical, and a combination thereof.

A negative electrode coating composition according to an embodiment may be prepared by the following preparing process.

The carbon-based material is mixed with a sulfur raw material. This mixing process may be carried out either dry or wet. If the mixing process is carried out in a dry manner, it may be carried out using a sulfur raw material that is solid-phase at a room temperature, and if it is carried out in a wet manner, it may be carried out using a sulfur raw material that is liquid-phase at a room temperature.

The carbon-based material may be amorphous carbon or crystalline carbon as described above.

The sulfur raw material may be a thiol compound, a sulfide compound, a thiophene compound, a sulfonic acid, a sulfone, a sulfoxide, or a combination thereof. In an embodiment, the sulfur-containing compound may be a thiol compound.

The thiol compound may be mercapto acetic acid, 1-dodecanethiol, 6-mercapto-1-hexanol, 11-mercapto-1-undecanol, 2-naphthalenethiol, 1,4-benzenedimethanethiol, 4-mercaptobenzoic acid, 1,3-benzenedithiol, or a combination thereof, and the sulfide compound may be polyphenylene sulfide, carbon disulfide, metal sulfide, or a combination thereof. In the metal sulfide, the metal may be Ag, Na, Zn, Fe, or a combination thereof. Additionally, the thiophene compound may be thiophene (C₄H₄S), 2-methylthiophene, thianaphthene, 4,6-dimethyldibenzothiophene, or a combination thereof. The sulfonic acid may be p-toluene sulfonic acid, sodium dodecylbenzenesulfonate, taurine, or a combination thereof, the sulfone may be dimethyl sulfone, 4,4'-dichlorodiphenyl sulfone, or a combination thereof, and the sulfoxide may be dimethyl sulfoxide, methyl phenyl sulfoxide, or a combination thereof.

Regardless of whether the mixing process is performed in a dry or wet manner, the carbon-based material and the sulfur raw material may be mixed in a weight ratio of 4:1 to 999:1. The mixing ratio may be a weight ratio of 4:1 to 900:1, 5:1 to 100:1, or 5:1 to 20:1.

Next, the obtained mixture is heat-treated, and the surface of the carbon-based material may be coated with a sulfur raw material according to this mixing and heat treatment process. The heat treatment process may be performed at 70 °C to 110 °C.

A metal is supported on the obtained heat-treated product to produce a supported product. The supporting process may be carried out by adding a metal compound and a reducing agent to the mixture. This addition process may be carried out in a solvent, and the solvent may be water, ethanol, glycerol, benzene, xylene, or a combination thereof. Additionally, NaBH₄, ascorbic acid, trisodium citrate, ethylene glycol, or a combination thereof may be used as the reducing agent.

In the process of supporting the metal, an amount of the metal compound used may be adjusted to 3 wt% to 40 wt%, 4 wt% to 25 wt%, 5 wt% to 20 wt%, or 5 wt% to 15 wt%, based on 100 wt% of the total weight of the carbon-based material and the metal in the supported product. In addition, the reducing agent may be used in an amount appropriate for the reduction reaction of the metal compound to occur, and there is no need for special limitations. For example, the amount of reducing agent used may be 10 wt% to 300 wt% based on 100 wt% of the metal compound.

The metal compound may be a metal nitride, a metal sulfate, a metal perchlorate or a combination thereof, for example, if the metal is Ag, it may be AgNO₃, Ag₂SO₄, AgClO₄, or a combination thereof.

The obtained supported product is heat treated. The heat treatment process may be carried out at a temperature at which the sulfur raw material may be decomposed and removed, for example, at 100 °C to 500 °C, 150 °C to 500 °C, 200 °C to 450 °C, or 200 °C to 400 °C. Specifically, if a thiol compound is used as a sulfur raw material, it may be heat treated at 100 °C to 400 °C.

Additionally, the heat treatment may be performed under a nitrogen atmosphere, an argon atmosphere, or a combination thereof. Additionally, the heat treatment may be performed for 2 hours to 20 hours.

According to this heat treatment process, the sulfur raw material is decomposed, and thus no sulfur raw material remains in the final negative electrode coating layer. Because sulfur is present by binding with the metal and the carbon-based material in the negative electrode coating layer, as a result, the metal and carbon-based material may be included in the negative electrode coating layer in a state of being chemically bonded via sulfur.

Another embodiment provides an all-solid-state battery including the negative electrode coating composition.

The all-solid-state battery includes a negative electrode including a current collector and a negative electrode coating layer on one surface of the current collector, positive electrode, and a solid electrolyte layer between the negative electrode and the positive electrode, wherein the negative electrode coating layer includes the negative electrode coating composition according to the embodiment.

The amount of the negative electrode coating composition may be 60 wt% to 99 wt%, or 85 wt% to 99 wt%, based on 100 wt% of the total negative electrode coating layer.

The binder may include a water-insoluble binder, a water-soluble binder or a combination thereof.

The water-insoluble binder may include, for example, polyvinylchloride, carboxylated polyvinylchloride, polyvinyl fluoride, an ethylene oxide-containing polymer, an ethylene propylene copolymer, polystyrene, polyvinyl pyrrolidone, polyurethane, polytetrafluoroethylene, polyvinylidene fluoride, polyethylene, polypropylene, polyamideimide, polyimide, polyacrylate, or a combination thereof.

The water-soluble binder may include a rubber-based binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinyl pyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If a water-soluble binder is used as the above negative binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, an alkali metal salt thereof, or a combination thereof. The alkali metal may be Na, K, or Li. An amount of such thickener used may be 0.1 parts by weight to 10 parts by weight based on 100 parts by weight of the negative electrode coating composition. The cellulose-based compound may also act as a binder.

The binder is not limited thereto, and any binder used in the relevant technical field may be used, and an amount of the binder may also be appropriately adjusted.

The binder may be included in an amount of 1 wt% to 15 wt% based on 100 wt% of the total negative electrode coating layer, and for example, the binder may be present in an amount of 1 wt% or more, 2 wt% or more, 3 wt% or more, 4 wt% or more, 5 wt% or more, 6 wt% or more, 7 wt% or more, 8 wt% or more, 9 wt% or more, 10 wt% or more, 11 wt% or more, 12 wt% or more, 13 wt% or more, or 14 wt% or more, and 15 wt% or less, 14 wt% or less, 13 wt% or less, 12 wt% or less, 11 wt% or less, 10 wt% or less, 9 wt% or less, 8 wt% or less, 7 wt% or less, 6 wt% or less, 5 wt% or less, 4 wt% or less, 3 wt% or less, or 2 wt% or less based on 100 wt% of the total negative electrode coating layer.

If the binder is included in the negative electrode coating layer of the all-solid-state battery in the above amount range, the electrical resistance and adhesive strength may be improved, thereby improving the characteristics (battery capacity and power characteristics) of the all-solid-state battery.

The negative electrode coating layer may further include an additive such as a filler and a dispersant. In addition, known materials generally used in all-solid-state batteries may be used as fillers, dispersants, etc. that may be included in the negative electrode coating layer.

According to an embodiment, the negative electrode may further include a lithium-containing layer formed between the current collector and the negative electrode coating layer during initial charging after preparation of the battery. A thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer is within the above range, it may properly function as a lithium storage layer and may further improve its cycle-life.

The lithium-containing layer may be formed if lithium ions are deintercalated from the positive electrode active material during charging after the battery is fabricated, pass through the solid electrolyte, and move toward the negative electrode, resulting in lithium being precipitated and deposited on the negative electrode current collector.

The charging process may be a formation process performed 1 time to 3 times at 0.05 C to 1 C at about 25 °C to 50 °C. If lithium is precipitated and deposited to form a lithium-containing layer, the lithium included in the lithium-containing layer is ionized and moves toward the positive electrode during discharge, and thus this lithium may be used as a negative electrode active material.

In an embodiment, because the lithium-containing layer is located between the current collector and the negative electrode coating layer, the negative electrode coating layer may act as a protective layer of the lithium-containing layer, thereby suppressing the precipitation and growth of lithium dendrites. As a result, short circuiting and capacity reduction of the all-solid-state battery may be suppressed, and as a result, the cycle-life of the all-solid-state battery may be improved.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the negative electrode current collector may be 1 µm to 20 µm, 5 µm to 15 µm, or 7 µm to 10 µm.

The current collector may include a metal substrate and may further include a thin film formed on the substrate. The thin film may include an element that can form an alloy with lithium, and may be, for example, gold, silver, zinc, tin, indium, silicon, aluminum, bismuth, or a combination thereof, but is not limited thereto, and in the technical field, any element that may form an alloy with lithium may be used. If the current collector further includes the thin film and the lithium-containing layer is formed by precipitating during charging, a more flattened lithium-containing layer may be formed, thereby further improving the cycle-life of the all-solid-state battery.

A thickness of the thin film may be 1 nm to 800 nm, 10 nm to 700 nm, 50 nm to 600 nm, or 100 nm to 500 nm. If the film thickness is within the above range, the cycle-life characteristics may be further improved.

The solid electrolyte included in the solid electrolyte layer may be an inorganic solid electrolyte such as a sulfide-based solid electrolyte, an oxide-based solid electrolyte, a halide-based solid electrolyte, or a solid polymer electrolyte.

The sulfide-based solid electrolyte may be Li₂S-P₂S₅, Li₂S-P₂S₅-LiX (wherein X is a halogen element, for example I, or CI), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (m and n are integers of 0 or more and 12 or less and Z is one of Ge, Zn, or Ga), Li₂S-GeS₂, Li₂S-SiS₂-Li₃PO₄, Li₂S-SiS₂-LiₚMO_{q} (wherein p and q are each 0 or more and 12 or less and M is one of P, Si, Ge, B, Al, Ga, or In), or LiₐM_{b}P_{c}S_{d}Aₑ (wherein a, b, c, d, and e are each 0 or more and 12 or less, M is Ge, Sn, Si, or a combination thereof, and A is one of F, Cl, Br, or I). For example, it may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). In addition, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, or Li_{6.2}PS_{5.2}Br_{0.8}.

For example, the sulfide-based solid electrolyte may be an argyrodite-type sulfide-based solid electrolyte. The sulfide-based solid electrolyte may be, for example, LiₐM_{b}P_{c}S_{d}Aₑ (wherein a, b, c, d, and e are all 0 or more and 12 or less, M is Ge, Sn, Si, or a combination thereof, and A is one of F, Cl, Br, or I), specifically Li₃PS₄, Li₇P₃S₁₁, Li₇PS₆, Li₆PS₅Cl, Li₆PS₅Br, Li₆PS₅I, Li_{5.8}PS_{4.8}Cl_{1.2}, Li_{6.2}PS_{5.2}Br_{0.8}, and the like.

The sulfide-based solid electrolyte may be amorphous, crystalline, or a mixture of these. The sulfide-based solid electrolyte may be obtained by, for example, mixing Li₂S and P₂S₅ in a mole ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. Mechanical milling or a solution method may be applied as a mixing method. The mechanical milling is to make starting materials into particulates by putting the starting materials, ball mills, and the like in a reactor and fervently stirring them. The solution method may be performed by mixing the starting materials in a solvent to obtain a solid electrolyte as a precipitate. Additionally, additional firing may be performed after mixing. If additional firing is performed, the crystals of the solid electrolyte may become more solid.

Of course, a commercially available solid electrolyte may be used as the sulfide-based solid electrolyte.

The oxide-based solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, and 0≤y≤1), lithium lanthanum titanate (LiₓLa_{y}TiO₃, 0<x<2, and 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M = Te, Nb, or Zr, and x is an integer of 1 to 10), or a mixture thereof.

The solid polymer electrolyte may include, for example, one or more selected from polyethylene oxide, poly(diallyldimethylammonium) trifluoromethanesulfonylimide (poly(diallyldimethylammonium)TFSI), Cu₃N, Li₃N, LiPON, Li₃PO₄·Li₂S·SiS₂, Li₂S·GeS₂·Ga₂S₃, Li₂O·11Al₂O₃, Na₂O·11Al₂O₃, (Na,Li)₁₊ₓTi₂₋ₓAlₓ(PO₄)₃(0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (x≤0.8, 0≤y≤1.0, M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), and Li₇₊ₓAₓLa₃₋ₓZr₂O₁₂ (0<x<3, A is Zn).

The halide-based solid electrolyte may include a Li element, an M element (M is a metal other than Li), and an X element (X is a halogen). The examples of X may include F, CI, Br, and I. In particular, in the halide-based solid electrolyte, at least one of Br and Cl is suitable as the above X. In addition, the examples of M may include metal elements such as Sc, Y, B, Al, Ga, and In.

A composition of the halide-based solid electrolyte is not particularly limited, but may be represented by Li₆₋₃ₐMₐBr_{b}Cl_{c} (where M is a metal other than Li, 0<a<2, 0≤b≤6, 0≤c≤6, b+c=6). Herein, a may be 0.75 or more, 1 or more, and a may be 1.5 or less. The b may be 1 or more, and may be 2 or more. Additionally, the c may be 3 or more, and may be 4 or more. Specific examples of the halide-based solid electrolyte may be Li₃YBr₆, Li₃YCl₆, or Li₃YBr₂Cl₄.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. Herein, the binder may be a styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

The positive electrode includes a positive electrode current collector and a positive electrode active material layer on one surface of the positive electrode current collector.

The positive electrode active material layer may include a positive electrode active material. The positive electrode active material may be a positive electrode active material capable of reversibly intercalating and deintercalating lithium ions and for example, the positive electrode active material may be at least one of a composite oxide of lithium and a metal selected from cobalt, manganese, nickel, and a combination thereof. Examples of the positive electrode active material may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-αF}¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤ 1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the above chemical formulas, A is Ni, Co, Mn, or a combination thereof; B¹ is Al, Ni, Co, Mn, Cr, Fe, Mg, Sr, V, a rare earth element, or a combination thereof; D¹ is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail because it is well-known in the related field.

In addition, as the coating layer, any known coating layer for the positive electrode active material of an all-solid-state battery may be applied, examples of which include Li₂O-ZrO₂ (LZO).

In addition, if the positive electrode active material is a ternary compound including nickel, cobalt and manganese, or nickel, cobalt and aluminum, the capacity density of the all-solid-state battery may be further improved and metal elution from the positive electrode active material in the charged state may be further reduced. Because of this, the long-term reliability and cycle characteristics of the all-solid-state battery may be further improved in a charged state.

Here, examples of the shape of the positive electrode active material include particle shapes such as spheres and ellipsoids-spheres. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

The positive electrode active material layer may further include a solid electrolyte. The solid electrolyte included in the positive electrode active material layer may be the aforementioned solid electrolyte, and in this case, it may be the same as or different from the solid electrolyte included in the solid electrolyte layer. The solid electrolyte may be included in an amount of 10 wt% to 30 wt% based on a total weight of the positive electrode active material layer.

The positive electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode active material layer may further include a binder and/or a conductive material.

The binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The binder may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the binder may sufficiently exhibit adhesive ability without deteriorating battery performance.

The conductive material is used to impart conductivity to the electrode, and any material that does not cause chemical change and conducts electrons can be used in the battery, and examples thereof may include a carbon-based material such as natural graphite, artificial graphite, carbon black, acetylene black, ketjen black, a carbon fiber, a carbon nanofiber, a carbon nanotube, and the like, a metal-based material including copper, nickel, aluminum, silver, etc. and in the form of a metal powder or a metal fiber, a conductive polymer such as a polyphenylene derivative, or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the conductive material may improve electrical conductivity without deteriorating battery performance.

A thickness of the positive electrode active material layer may be 90 µm to 200 µm. For example, the thickness of the positive electrode active material layer may be greater than or equal to 90 µm, greater than or equal to 100 µm, greater than or equal to 110 µm, greater than or equal to 120 µm, greater than or equal to 130 µm, greater than or equal to 140 µm, greater than or equal to 150 µm, greater than or equal to 160 µm, greater than or equal to 170 µm, greater than or equal to 180 µm, or greater than or equal to 190 µm, and less than or equal to 200 µm, less than or equal to 190 µm, less than or equal to 180 µm, less than or equal to 170 µm, less than or equal to 160 µm, less than or equal to 150 µm, less than or equal to 140 µm, less than or equal to 130 µm, less than or equal to 120 µm, or less than or equal to 110 µm.

As described above, because the thickness of the positive electrode active material layer is thicker than that of the negative electrode coating layer, the capacity of the positive electrode is greater than that of the negative electrode.

The positive electrode can be manufactured by forming a positive electrode active material layer on a positive electrode current collector by dry or wet coating.

In an embodiment, the all-solid-state battery may additionally include a cushioning material to cushion thickness changes that occur during charging and discharging. The cushioning material may be present between the negative electrode and the case, and in the case of a battery in which one or more electrode assemblies are stacked, it may be present between different electrode assemblies.

The cushioning material may include a material that has an elastic recovery rate of 50% or more and may have an insulating function, and specifically includes a silicone rubber, an acrylic rubber, a fluorine-based rubber, nylon, a synthetic rubber, or a combination thereof. The cushioning material may be present in the form of a polymer sheet.

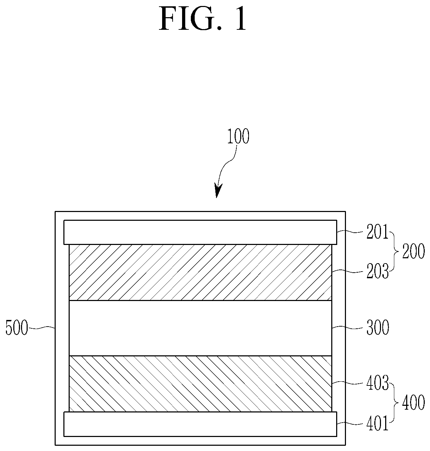

FIG. 1 is a cross-sectional view of an all-solid-state battery according to an embodiment. Referring to FIG. 1, the all-solid-state battery 100 may have a structure in which an electrode assembly in which a negative electrode 400 including a negative electrode current collector 401 and a negative electrode coating layer 403, a solid electrolyte layer 300, and a positive electrode 200 including a positive electrode active material layer 203 and a positive electrode current collector 201 are stacked is housed in a case such as a pouch. The all-solid-state battery 100 may further include an elastic layer 500 on the outer surface of at least one of the positive electrode 200 and the negative electrode 400. FIG. 1 illustrates one electrode assembly including a negative electrode 400, a solid electrolyte layer 300, and a positive electrode 200, but an all-solid-state battery may be manufactured by stacking two or more electrode assemblies.

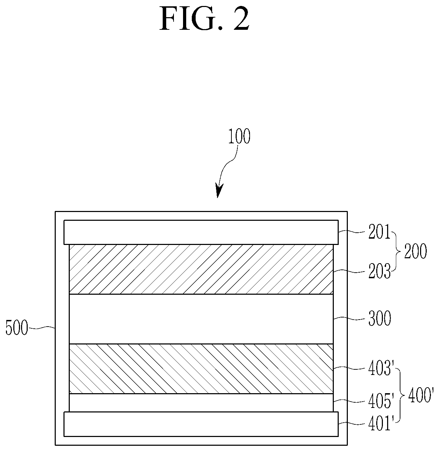

FIG. 2 schematically illustrates the structure of an all-solid-state battery in a charging state. The all-solid-state battery 100 includes a positive electrode 200 including a positive electrode current collector 201 and a positive electrode active material layer 203, a negative electrode 400 including a negative electrode current collector 401, a negative electrode coating layer 403, and a solid electrolyte 300 between the positive electrode 200) and the negative electrode 400, and includes a battery case 500 in which these are accommodated.

If such an all-solid-state battery 100 is charged, as shown in FIG. 2, lithium ions are deintercalated from the positive electrode active material and deposited on the negative electrode current collector 401', and as a result, a lithium deposition layer 405' is formed between the current collector 401' and the negative electrode coating layer 403".

An all-solid-state battery according to an embodiment may be fabricated by placing a negative electrode, a positive electrode, and a solid electrolyte layer between the negative electrode and the positive electrode, preparing a stack, and pressing the stack.

The pressing process can be performed in the range of 25 °C to 90 °C. Additionally, the pressing process may be performed by pressing at a pressure of less than or equal to 550 MPa, for example less than or equal to 500 MPa, for example 1 MPa to 500 MPa. The pressing time may vary depending on temperature and pressure, and may be, for example, less than 30 minutes. The pressing process may be, for example, an isostatic press, a roll press, a plate press, or a warm isostatic press.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Manufacturing of Negative Electrode

Carbon black and 2-naphthalene thiol powder were mixed in a weight ratio of 10:1. The mixture was heat-treated at 90 °C. AgNO₃ and an NaBH₄ reducing agent were added to the heat-treated product in a water solvent to prepare a supported product. At this time, AgNO₃ was used in an amount of 11 wt% based on 100 wt% of the total weight of Ag and carbon black in the supported product. Additionally, the amount of NaBH₄ reducing agent used was 22 wt% based on 100 wt% of AgNO₃.

The obtained mixture was heat-treated at 400 °C for 4 hours under a nitrogen atmosphere to prepare a negative electrode coating composition. In the prepared negative electrode coating composition, the amount of silver was 5 wt%, the amount of carbon black was 88 wt%, and the amount of sulfur was 1.1 wt%.

The negative electrode coating composition, a styrene butadiene rubber, and sodium carboxymethyl cellulose were mixed in a weight ratio of 100:6:3 in a water solvent to prepare a negative electrode coating slurry.

The prepared slurry was coated on a stainless steel foil current collector and then vacuum-dried at 80 °C to manufacture a negative electrode including a 12 µm-thick negative electrode coating layer and a 10 µm-thick current collector. The thickness of the negative electrode coating layer was 12 µm.

### (2) Manufacturing of Solid Electrolyte Layer

To an argyrodite-type solid electrolyte of Li₆PS₅Cl, an isobutyryl isobutyrate binder solution (a solid content: 50 wt%) to which an acrylate-based polymer of butyl acrylate was added, added and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 100 µm-thick solid electrolyte layer.

### (3) Manufacturing of Positive Electrode

A mixture was prepared by mixing LZO (Li-doped zinc oxide) coated positive electrode active material (LiNi_{0.9}Mn_{0.05}CO_{0.05}O₂), argyrodite-type solid electrolyte Li₆PS₅Cl, a conductive carbon nanofiber, and a polytetrafluoroethylene binder in a weight ratio of 85:15:3:1.5.

The prepared mixture was coated on an aluminum foil current collector and then vacuum-dried at 45 °C to prepare a negative electrode including a 160 µm-thick positive electrode active material layer and a 10 µm-thick current collector. The thickness of the positive electrode active material layer was 12 µm.

### (4) Manufacturing of All-solid-state Full-cell

The manufactured negative electrode, the solid electrolyte, and a counter electrode were sequentially stacked with the positive electrode and the counter electrode, and a pressure of 8 MPa was applied to manufacture an all-solid-state battery cell.

### (Comparative Example 1)

A negative electrode coating composition was prepared by mechanically mixing carbon black and Ag at a weight ratio of 75:25 using mortar. In the prepared negative electrode coating composition, the amount of silver was 25 wt% and the amount of carbon black was 75 wt%.

A negative electrode and an all-solid-state battery cell were manufactured in the same manner as in Example 1, except that the negative electrode coating composition was used.

### (Comparative Example 2)

Carbon black and 2-naphthalene thiol powder were mixed in a weight ratio of 10:1. The mixture was heat-treated at 90 °C. AgNO₃ and an NaBH₄ reducing agent were added to the heat-treated product in a water solvent to prepare a supported product. Herein, AgNO₃ was used in an amount of 11 wt% based on 100 wt% of the total weight of Ag and carbon black in the supported product. Additionally, the amount of NaBH₄ reducing agent used was 22 wt% based on 100 wt% of AgNO₃.

A negative electrode and an all-solid-state full-cell were manufactured in the same manner as in Example 1, except that the supported product was used as a negative electrode coating composition.

### (Comparative Example 3)

50 mL of glycerol (99.9%, Aldrich) and 0.5 mM polyvinylpyrrolidone (weight average molecular weight (Mw): 55,000, Aldrich) were added to a 100 mL reaction vessel and heated to 80 °C. The resulting materials were mixed until a transparent solution was formed, and then cooled to 30 °C. Next, 5 g of carbon black was added to the reaction mixture and mixed for 10 minutes, then 50 mM AgNO₃ (99.9%, Aldrich) was added and mixed for 5 minutes. The temperature of the mixture was raised to 100°C and the reaction was performed for 12 hours.

Next, 50 mL of deionized water (DI water) was added to the reaction product, and sonication was performed for 2 minutes. Next, glycerol and polyvinylpyrrolidone were separated from the carbon black using a glass filter, and the silver-supported carbon black was washed with ethanol and deionized water (DI water) to remove any residual components.

The washed product was dried in a vacuum oven at 90 °C for more than 8 hours to prepare a negative electrode coating composition. In the negative electrode coating composition, the silver amount was 5 wt% and the carbon amount was 95 wt%.

A negative electrode and an all-solid-state full-cell were manufactured in the same manner as in Example 1, except that the negative electrode coating composition was used.

### (Comparative Example 4)

A negative electrode and an all-solid-state full-cell were manufactured in the same manner as in Example 1, except that only carbon black was used as the negative electrode coating composition.

### Experimental Example 1) SEM Photograph

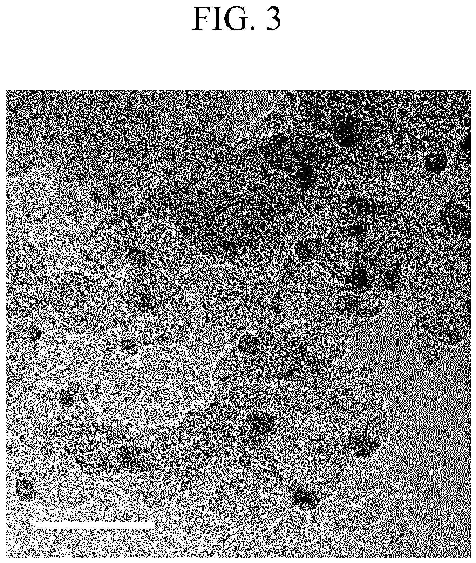

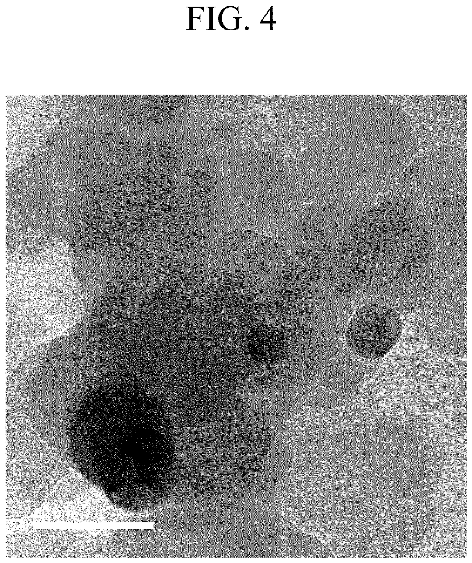

SEM images of the negative electrode coating compositions prepared in Example 1 and Comparative Example 1 are shown in FIGS. 3 and 4, respectively.

As shown in FIG. 3, the negative electrode coating composition prepared according to Example 1 can be seen to have silver uniformly dispersed in carbon black. On the other hand, as shown in FIG. 4, the negative electrode coating composition prepared according to Comparative Example 1 has silver coagulated in some areas on the surface.

### Experimental Example 2) Evaluation of X-ray Photoelectron Spectroscopy (XPS)

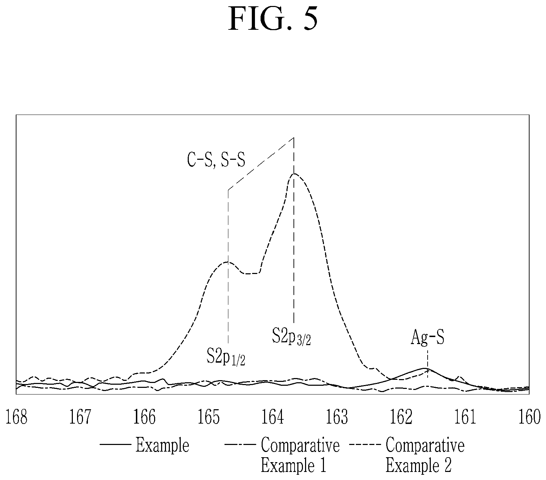

XPS S2p spectra were measured for the negative electrode coating compositions prepared according to Example 1, Comparative Example 1, and Comparative Example 2. The results are shown in FIG. 5. As shown in FIG. 5, in the case of Comparative Example 1 where carbon black and Ag were simply mixed, Ag-S and C-S bonds did not exist, whereas in the case of Example 1 where carbon black and Ag were chemically bonded through S, Ag-S bonds existed. In addition, in the case of Comparative Example 2, where 400 °C heat treatment was not performed, it can be seen that C-S bonds, S-S bonds, and Ag-S bonds are all present.

### Experimental Example 3) Resistance Density Evaluation

The resistances of the all-solid-state battery cells of Example 1 and Comparative Examples 1 to 3 were measured using a powder conductivity measurement method. The measured results are shown in Table 1.

**(Table 1)**

| | Resistance (10⁻² Ωcm) |
|---|---|
| Comparative Example 3 | 7.3 |
| Comparative Example 2 | 6.8 |
| Example 1 | 4.9 |
| Comparative Example 1 | 5.2 |

As shown in Table 1, the resistance value of Comparative Example 3, in which silver and oxygen are bonded, is much higher than that of Example 1. In particular, the resistance value of Comparative Example 3 was higher than that of Comparative Example 2 in which no bond between sulfur and metal was formed due to heat treatment.

Even in the case of Comparative Example 2, where no bond between sulfur and metal is formed, a high resistance value is shown, indicating that deteriorated rate capability is shown.

In addition, the resistance value after heat treatment of Example 1, in which a bond between silver and sulfur is formed through heat treatment, and thus carbon black is uniformly distributed, and the current within the negative electrode is uniformly distributed, is very low.

In addition, the resistance value after heat treatment of Example 1 is lower than the resistance value of Comparative Example 1 in which carbon black and silver are simply mixed.

### Experimental Example 4) Thermogravimetric Analysis (TGA)

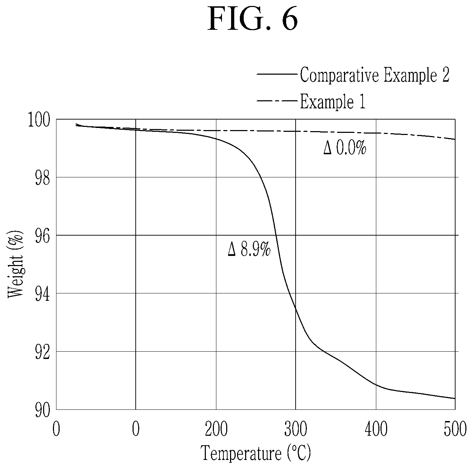

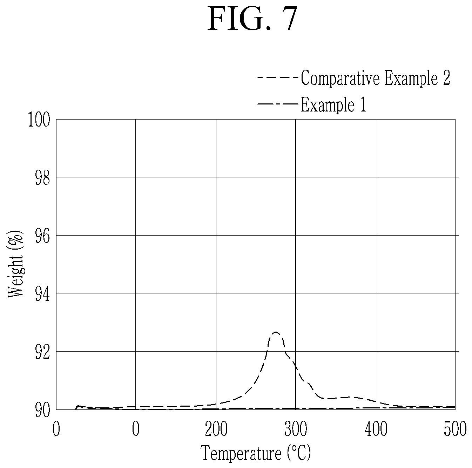

In the process for preparing the negative electrode coating composition of Example 1, thermogravimetric analysis (TGA) was measured for the product before heat treatment and the negative electrode coating composition after heat treatment. Among the results, the weight % change results are shown in FIG. 6, and the DTG (derivative thermo gravimetry, %/min) values are shown in FIG. 7. The thermogravimetric analysis measurement method was performed in an argon atmosphere, and measurements were made at a heating rate of 10 °C/min (Ramp 10 °C/min to 900 °C) from room temperature (25 °C) to 900 °C under an N₂ atmosphere.

As shown in FIGS. 6 and 7, the product before heat treatment had a weight loss of 8.9 wt%, whereas the negative electrode coating composition after heat treatment had no weight loss. This weight loss is thought to be a result obtained from the thiol compound, and thus the thiol compound present before the heat treatment is practically not left after the heat treatment.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A negative electrode coating composition for an all-solid-state battery, comprising
a metal and a carbon-based material,
wherein the metal and carbon-based material are chemically bonded via sulfur.

2. The negative electrode coating composition for an all-solid-state battery as claimed in claim 1, wherein the negative electrode coating composition has a peak related to metal-sulfur bonding in a spectrum obtained by XPS analysis.

3. The negative electrode coating composition for an all-solid-state battery as claimed in claim 1, wherein the negative electrode coating composition has a peak appearing at a binding energy of 160 eV to 162 eV in an S2p spectrum obtained by XPS analysis.

4. The negative electrode coating composition for an all-solid-state battery as claimed in claim 1, wherein the carbon-based material is amorphous carbon, crystalline carbon, or a mixture thereof.

5. The negative electrode coating composition for an all-solid-state battery as claimed in claim 1, wherein the metal is Ag, Au, Sn, Zn, Al, Mg, Ge, Cu, In, Ni, Bi, Pt, Pd, or a combination thereof.

6. The negative electrode coating composition for an all-solid-state battery as claimed in claim 1, wherein an amount of the metal is 3 wt% to 40 wt% based on 100 wt% of a total amount of the metal and the carbon-based material.

7. A method for preparing a negative electrode coating composition for an all-solid-state battery, comprising
mixing a carbon-based material and a sulfur raw material to prepare a mixture;
supporting a metal on the mixture to prepare a supported product; and
heat treating the supported product.

8. The method for preparing a negative electrode coating composition for an all-solid-state battery as claimed in claim 7, wherein the sulfur raw material is a thiol compound, a sulfide compound, a thiophene compound, a sulfonic acid, a sulfone, a sulfoxide, or a combination thereof.

9. The method for preparing a negative electrode coating composition for an all-solid-state battery as claimed in claim 7, wherein the heat treating is performed at 100 °C to 500 °C.

10. An all-solid-state battery, comprising
a negative electrode including a current collector and a negative electrode coating layer on one surface of the current collector;
a positive electrode; and
a solid electrolyte layer between the negative electrode and the positive electrode,
wherein the negative electrode coating layer includes the negative electrode coating composition as claimed in any one of claim 1 to claim 6.

11. The all-solid-state battery as claimed in claim 10, wherein the solid electrolyte is a sulfide-based solid electrolyte.

12. The all-solid-state battery as claimed in claim 10, wherein the all-solid-state battery includes a lithium-containing layer formed between the current collector and the negative electrode coating layer during initial charging.
